# EUROPEAN PATENT APPLICATION

(11) **EP 1 030 282 A1**
(43) Date of publication of application: **23.08.2000**
(21) Application number: 98940645.9
(22) Date of filing: 01.09.1998
(51) Int. Cl.: G09C 1/00, H04L 9/32

(54) **DIGITAL SIGNATURE GENERATING SERVER AND DIGITAL SIGNATURE GENERATING METHOD**

(30) Priority: 02.09.1997 JP 23692697; 02.09.1997 JP 23692797
(71) Applicant: Cadix Inc., Tokyo 154-0015 (JP)
(72) Inventor: TABUKI, Takaaki, Cadix Inc., Tokyo 154-0015 (JP)
(74) Representative: Heim, Hans-Karl, Dipl.-Ing.
(86) International application number: JP9803888
(87) International publication number: WO9912144

(57) **Abstract**

For digital signature processing using a public key cryptosystem, there is provided a convenient digital signature system which facilitates control of a private key. Based on an "ID" supplied by a user, the dynamic signature encryption key control section 16 obtains registered dynamic signature data and a private key from a control database 12. The registered dynamic signature data is compared with authentication dynamic signature data sent by the user in the dynamic signature verifying section 14. When it is determined that they are identical signature data, the dynamic signature encryption key control section 16 supplies message data sent from the user, and the private key to the encryption operation section 18. The encryption operation section 18 encrypts the message data using the private key, and sends the encrypted message data to the dynamic signature encryption key control section 16. The dynamic signature encryption control section 16 returns signed, i.e. encrypted, message data or the like to the user. The user need not control his own private key.

## Description

### TECHNICAL FIELD

The present invention relates to a public key cryptosystem, and in particular to a public key authentication using digital signatures. The present invention further relates to a method for marking digital signatures using a public key cryptosystem.

### BACKGROUND ART

As network communication has developed, the use of cryptosystems when exchanging messages has become more common. Although conventional private key methods remain in use, the use of public key cryptosystems has grown more common because conventional systems require complicated key control, as well as other reasons.

In a public key cryptosystem, each person manages their own private key, and shares a public key with others. Anyone can encrypt a message using someone's public key, and send that encrypted message to him or her. Since a message encrypted using a public key can be decrypted only by a person holding the corresponding private key, a desired level of confidentiality for the message can be maintained.

The public key cryptosystem is further distinguished by the ease with which it can be used to create a digital signature.

That is, a person A, wishing to distinctively mark (sign) a specific message, can do so by encrypting that message using his private key. A message encrypted using A's private key can be decrypted only using A's public key. Therefore, anyone who can decrypt the encrypted message using A's public key can thereby confirm the content of the message. Any message which can be decrypted using A's public key must in fact be a message having been encrypted using A's private key and, therefore, the fact that the message can be decrypted using A's public key automatically means that the message was encrypted using A's private key. If only person A has access to A's private key, it is safe to conclude that only A could have encrypted the message.

As described above, when it can be confirmed that a process could only have been performed by A, that process can be considered as A's "signature".

Therefore, for such a public key cryptosystem, such as a digital signature, to be effective, it must be certain that a private key is known only to its owner. That is, each user must strictly control any private keys under his responsibility.

Keys of as long as 500 to 1000 bits have been used or suggested for public key cryptosystems to ensure cryptographic strength. However, few people are able to remember 500 to 1000 bits of data, and most people are only able to remember a password of a few digits. Therefore, generally, private keys are stored on a computer hard disk or on an IC card.

However, as a private key saved on a computer hard disk or the like could be accessible to a number of people, private keys saved on a hard disk are often protected using a password. That is, to use a private key to attach a digital signature or for other uses, the user must input a password to access the private key.

### DISCLOSURE OF INVENTION

### Problems to be Solved by the Invention

### Problem 1:

In a conventional private key cryptosystem, each user must control their private keys, specifically through protection using a password or the like.

However, shorter, more easily remembered passwords, are also more easily stolen and, if exposed, are more easily remembered because they are short.

That is, as conventional private key control greatly depends on the strength of a password, there is a limit to the protection afforded by a specific private key, and "posing " by a third person is not impossible. That is, there is a significant risk of a third person posing as the authorized user, and illegally writing the user's digital signature.

Further, as control of each private key is ultimately the responsibility of each authorized user, keys such as a "company key" belonging to a corporation, are also controlled by an individual. Therefore, all keys, whether individual or company, are controlled with similar level of security, for the most part irrespective of the importance of the key.

As a result, presently, illegal use of an important company key is as likely to occur as illegal use of an individual user's personal private key.

Also, when a certain private key becomes unnecessary, such as due to an employee transfer or authorization changes, the now redundant private key must be deleted. However, data stored on a hard disk may not be thoroughly deleted, and the private key data may remain in a recoverable state.

Still further, there has been growing demand for private keys belonging to a company itself rather than an individual. That is, a key for a company itself is desired. Such a company key may correspond to a company seal to be used by respective employees of the company. However, the present public key cryptosystem is based on an assumption that one private key is used by only one specific individual, and does not take into consideration a case where a corporate key is shared by two or more people. In other words, a mechanism in which one private key is shared by a person other than its authorized owner (a company) on behalf of the owner, has not yet established.

The present invention has been conceived in view of the above, and aims to provide a digital signature server for reliably preventing unauthorized application of a digital signature belonging to a company.

### Problem 2:

For digital signature application using a private key of a conventional public key cryptosystem, each user must be responsible for the control of their own private key, specifically, through protection using a password.

However, shorter, more easily remembered passwords, are also more easily stolen and, if exposed, are more easily remembered because they are short.

That is, as conventional private key control greatly depends on the strength of a password, there is a limit to the protection afforded a specific private key, and "posing" by a third person is not impossible. That is, there is a significant risk of a third person posing as the authorized user, and illegally creating the user's digital signature.

Further, as control of each private key is ultimately the responsibility of each authorized user, keys such as a "company key" belonging to a corporation, are also controlled by an individual. Therefore, all keys, whether individual or company, are controlled with similar level of security, for the most part irrespective of the importance of the key.

As a result, presently, illegal use of an important company key is as likely to occur as illegal use of an individual user's personal private key.

Still further, there has been growing demand for private keys belonging to a company itself rather than an individual. That is, a key for a company itself is desired. Such a company key may correspond to a company seal to be used by respective employees of the company. However, the present public key cryptosystem is based on an assumption that one private key is used by only one specific individual, and does not take into consideration a case where a corporate key is shared by two or more people. In other words, a mechanism in which one private key is shared by a person other than its authorized owner (a company) on behalf of the owner, has not yet established.

The present invention has been conceived in view of the above, and aims to provide a digital signature server for reliably preventing unauthorized application of a digital signature belonging to a company.

### Summary of the Invention

### Disclosure of Invention for Digital Signature Server

The present invention relates to a digital signature server, and is characterized in that a plurality of private keys can be shared among two or more persons. According to the conventional art, a private key is owned and controlled by one person. Therefore, a mechanism has been established which allows only use of the private key by only that person, which may provoke illegal conduct (posing and so on) using a stolen password, as described elsewhere in this specification.

According to the present invention, there is provided signature preparing server which realizes a method in which a plurality of private keys are shared by two or more people.

Specifically, there is provided a digital signature preparing server for receiving message data to be digitally signed and an identifier of a user requesting the digital signature, for signing the message data using a private key of the user, and for outputting the signed message data. The digital signature preparing server comprises private key memory means for storing a private key of the user, the key being registered therein in advance, and for outputting the registered private key of the user based on an identifier of the user; and signing means for signing the message data using the private key. Further, the private key memory means is capable of handling a case where identical private keys are registered with respect to identifiers of different users.

Still further, the private key memory means is capable of handling a case where a single user has a plurality of identifiers.

Yet further, the above digital signature preparing server further comprises biometric signature data memory means for storing biometric signature data on the user, the data being registered therein in advance, and for outputting the registered biometric signature data for the user based on an identifier of the user; and detection means for comparing biometric signature data input by the user and the registered biometric signature data of the user output from the biometric signature data memory means, to detect whether or not characteristic amounts coincide between them, wherein the signing means signs message data using the private key obtained, only when the detection means determines coincidence of the characteristic amounts.

Yet further, the biometric signature data is data of a signature manually written by the user.

Yet further, the biometric signature data is data of the user's retina pattern.

Yet further, the biometric signature data is data of the user's fingerprint.

Yet further, the above digital signature preparing server according to the present invention, further comprises conversion means for converting into image data, the data of a signature manually written by the user as input biometric signature data; image data signing means for signing the image data, using the private key; and image data output means for outputting the signed image data.

Yet further, the private key memory means comprises an external memory means detachable from the digital signature preparing server.

Yet further, the private key memory means comprises an external memory means detachable from the digital signature preparing server, and the signing means is formed integrally to the external memory means.

Yet further, the external memory means comprises an IC card.

### Disclosure of Invention for Digital Signature Method

The present invention also relates to a digital signing method, and is characterized by the use of biometric signature data, in addition to an ID and a password, in user identification to achieve more reliable user identification.

The present invention is further characterized by the sharing of a plurality of private keys by two or more persons. To realize such a digital signature method, a data structure for "a plurality of users vs a plurality of private keys" is established in the memory means.

According to the conventional art, a private key is owned and controlled by only one person. Therefore, a mechanism has been established which allows only use of the private key by only that person, which may provoke illegal use (posing and so on) using a stolen password, as described elsewhere.

The present invention provides a digital signature preparing method for realizing a method in which a plurality of private keys are shared by a plurality of persons. Specifically, the following means are provided.

In order to achieve the above object, according to the present invention, there is provided a digital signature preparing method comprising an input step of inputting message data to be digitally signed, an identifier of a user requesting the digital signature, and biometric signature data on the user; a registered biometric signature data obtaining step of obtaining registered biometric signature data on the user, the data being registered therein in advance, based on the identifier of the user; a detection step of comparing the input biometric signature data and the registered biometric signature data of the user, to detect whether or not characteristic amounts coincide between them; and a digital signing step of digitally signing the message data using the private key of the user only when the characteristic amounts is detected coincident with each other at the detection step. Biometric signature data is biometric data for specifying an individual, such as a fingerprint, a retina pattern, and so on. Signature data is used due to various merits thereof particularly in the following embodiments.

Further, identical private keys are possibly obtained with respect to identifiers of different users at the registered biometric signature data obtaining step.

As identical private keys can be provided to different users, a company key and so on can be easily controlled.

Still further, the registered biometric signature data obtaining step is capable of handling a case where a single user has a plurality of identifiers.

It is not uncommon for one person to have more than one job, function, or title. In such a case, it is preferable that he use a different digital signature for each function. Therefore, according to the present invention, one user can possess a plurality of identifiers (referred also as ID) so that one user can use a plurality of private keys.

Yet further, the biometric signature data is data of a signature manually written by the user.

Yet further, the biometric signature data is data of the user's retina pattern.

Yet further, the biometric signature data is data of the user's fingerprint.

Yet further, the above digital signature preparing method may further comprise a conversion step of converting the input data of a signature manually written by the user into image data, and an image data signing step of signing the image data, using the private key.

As even image data is given a signature using a private key, an image of a conventional handwritten signature can be utilized, which can help maintain similarity to a conventional system.

Also, the present invention relates to a computer readable memory medium on which is stored a program for achieving the invention as described in this specification.

Specifically, there may be provided a computer-readable recording medium containing a program which, when executed, causes the computer to follow an input step of inputting message data to be digitally signed, an identifier of a user requesting the digital signature, and biometric signature data on the user; a registered biometric signature data obtaining step of obtaining registered biometric signature data on the user, based on the identifier of the user; a detection step of comparing the input biometric signature data and the registered biometric signature data on the user, to detect whether or not characteristic amounts coincide between them; and a digital signing step for digitally signing the message data using the private key of the user only when the characteristic amounts are detected coincident with each other at the detection step.

Further, identical private keys are possibly obtained with respect to identifiers of different users at the registered biometric signature data obtaining step.

Still further, the registered biometric signature data obtaining step is capable of handling a case where a single user has a plurality of identifiers.

Yet further, the biometric signature data is data of a signature manually written by the user.

Yet further, the biometric signature data is data of the user's retina pattern.

Yet further, the biometric signature data is data on the user's fingerprint.

Yet further, an additional conversion step of converting the data on a signature manually written by the user, into image data, and an image data signing step of signing the image data using the private key, are included in the program instructions.

### BRIEF DESCRIPTION OF DRAWINGS

Fig. 1 is a diagram for explaining a structure of a digital signature preparing server according to a first preferred embodiment of the present invention;
Fig. 2 is a diagram for explaining the control database table of Fig. 1;
Fig. 3 is a diagram for explaining a structure of a digital signature preparing server according to a second preferred embodiment of the present invention;
Fig. 4 is a diagram illustrating an IC card;
Fig. 5 is a diagram for explaining the control database table of Fig. 3;
Fig. 6 is diagram for explaining a structure of a digital signature preparing method according to a third preferred embodiment of the present invention; and
Fig. 7 is a diagram for explaining an array of the array control module of Fig. 6.

### BEST MODE FOR CARRYING OUT THE INVENTION

In the following, preferred embodiments of the present invention will be described based on the accompanying drawings.

### Embodiment 1.

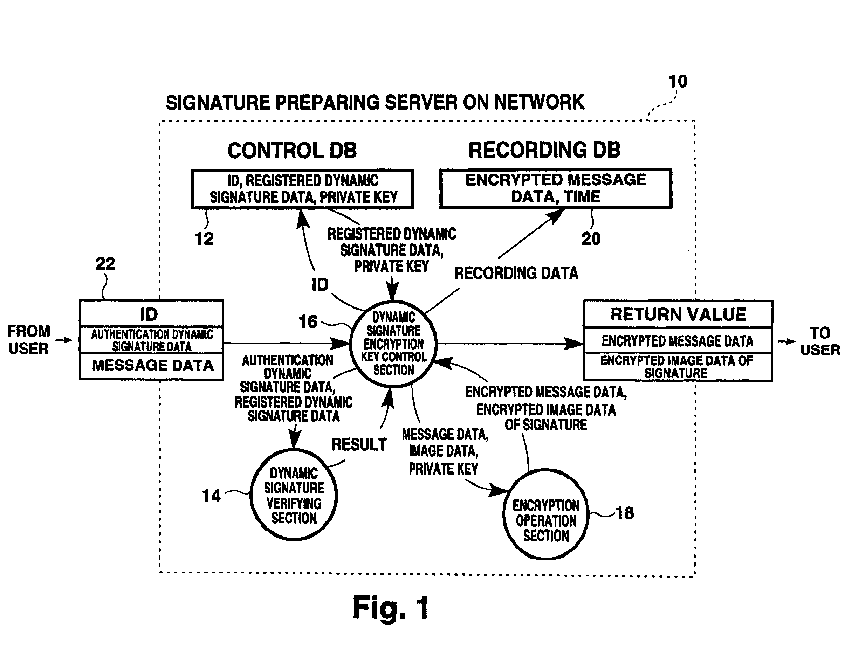

Fig. 1 is a block diagram showing a structure of a digital signature preparing server 10 according to Embodiment 1. The digital signature preparing server 10 according to this embodiment is a server operating on a network, and digitally signs a message document in response to an external request.

### Input Signal

An input 22 for the digital signature preparing server 10 includes, as shown in Fig. 1, a user "ID", a user's "authentication dynamic signature data", and "message data" which the user wishes to sign. Using a user's private key, the digital signature preparing server 10 encrypts the "message data" to thereby affixing a signature thereto, and then outputs "encrypted (signed) message data".

Here, "authentication dynamic signature data" includes biometric data for specifying an individual, such as data on a user's "handwritten signature", a fingerprint, a retina pattern. In this embodiment, authentication dynamic signature data is input by a person who wishes to use authentication, writing a "handwritten signature" on a tablet provided to a terminal, using a stylus pen and so on.

"Authentication dynamic signature data" of the input 22 for the digital signature preparing server 10 is dynamic signature data which is input by a user wishing to affix a digital signature. As described above, data on a user's "handwritten signature", sent from the terminal tablet or the like, may be used as "authentication dynamic signature data".

As shown in Fig. 1, the digital signature preparing server 10 has a control database 12 for controlling individual users and their private keys. That is, private keys are collectively controlled by the digital signature preparing server 10.

This embodiment is characterized by private key control made by a digital signature preparing server 10 (in the control database 12 thereof) rather than by an individual owner. This arrangement enables collective private key control, and thereby eliminates any need for complicated private key control by each user.

The control database 12 stores an "ID", "registered dynamic signature data", and a "private key". Here, "registered dynamic signature data" is data on a "handwritten signature", and refers to dynamic signature data which was pre-registered in the control database 12. A user registers his dynamic signature data in advance in the control database 12, and, when using the digital signature preparing server 10, writes a signature similar to the pre-registered "registered dynamic signature data" on a tablet or the like, to thereby easily and reliably identify himself.

It should be noted that dynamic signature data, which is "handwritten signature" data in this embodiment, may be any other unique and identifiable biometric data, such as a fingerprint, a retina pattern, or the like.

### Operation

Operation of the digital signature preparing server 10 will next be described.

When the digital signature preparing server 10 is supplied with an input 22 consisting of a user's "ID", "authentication dynamic signature data", and "message data", a dynamic signature encryption key control section 16 reads from the control database 12 "registered dynamic signature data" registered with respect to the user identified by the ID. As shown in Fig. 1, the dynamic signature encryption key control section 16 supplies "ID" to the control database 12.

Subsequently, the dynamic signature encryption key control section 16 supplies "registered dynamic signature data" received from the control database 12 and "authentication dynamic signature data", a part of the input 22, to a dynamic signature verifying section 14 (see Fig. 1).

The dynamic signature verifying section 14 compares the supplied "registered dynamic signature data" and "authentication dynamic signature data" for verification to determine whether or not certain characteristics coincide between them. When the result shows that the necessary characteristics of the "registered dynamic signature data", registered in the control database 12, coincide with the supplied "authentication dynamic signature data", it is decided that both data represent biometric signature data belonging to a same person, and therefore determines that the request for digital signature is legitimate (i.e., user requesting a digital signature is someone authorized to do so). Digital signature processing (described later) is then applied in the digital signature preparing server 10.

On the other hand, when the required characteristics of the "registered dynamic signature data", registered in the control database 12, do not coincide with those of the supplied "authentication dynamic signature data", the dynamic signature verifying section 14 (see Fig. 1) therefore determines that the input biometrics data does not belong to the registered person, and it is concluded that the request for digital signature is illegitimate. The digital signature preparing server 10 rejects the authentication request by causing the dynamic signature encryption key control section 16 to send a rejection message to the user.

Here, when the dynamic signature verifying section 14 sends data indicative of an appropriate authentication request to the dynamic signature encryption key control section 16, the dynamic signature encryption key control section 16 causes an encryption operation section 18 to perform digital signature processing. That is, the encryption operation section 18 encrypts the message data using a private key.

As shown in Fig. 1, the encryption operation section 18 receives "a private key" for use in encryption and "message data" to be encrypted from the dynamic signature encryption key control section 16. In this example, the encryption operation section 18 receives "image data", in addition to "message data", as an encryption object. Then, the "message data" and "image data" are encrypted (signed) in the encryption operation section 18.

"Image data" is image data describing "authentication dynamic signature data" input by a user, in the form of an image. "Authentication dynamic signature data" is numerical data expressing, for example, the dynamic of the pen with which the user has written a "handwritten signature", as speed, direction, pressing force, and so on of the pen. The data which expresses a "handwritten signature" in the form of an image is image data which is a reproduction of the dynamic of the pen on a 2D sheet of paper so that the signature data (the numerical data indicative of a pressing force and so on) is expressed in a visible form to aid visual recognition by human users.

As described above, image data for signature data is encrypted in this embodiment because of the popular request for a readable signature in a message, though encryption of image data is not indispensable in the present invention.

After encryption of the "message data" and "image data", the encryption operation section 18 outputs resultant "encrypted message data" and "encrypted signature image data".

The dynamic signature encryption key control section 16 then sends back to the user the "encrypted message data" and "encrypted signature image data". With such an arrangement, users can readily digitally sign documents without having to themselves control a private key because not only an ID but also biometric dynamic signature data is used for identification, and affixing a false signature through unauthorized use of a private key can be effectively prevented.

Further, the dynamic signature encryption key control section 16 also returns a "return value" to the user, the "return value" being a code referred to as a "return code" indicative of an encryption operation result.

By examining the "return value", the user can obtain detailed information as to whether the encryption operation has been duly completed or whether characteristics did not coincide between the authentication dynamic signature data and the registered authentication data for a person identified by the ID.

Further, while returning the "encrypted message data" and so on to the user, the dynamic signature encryption key control section 16 registers "encrypted message data" in the control database 20, as shown in Fig. 1. The control database 20 is a database for recording details of what digital signature processing is applied with respect to which message in response to whose request. This database 20 enables subsequent detection of unauthorized use. In this embodiment, a dedicated server for digital signature processing is provided to handle all digital signature-involved processing. Therefore, as all signature processing can be collectively controlled, information of all applications for signature processing, such as the party applying, date, and so on, can be recorded in the recording database 20.

It should be noted that the respective components of the digital signature preparing server 10 are achieved by means of a computer program. Specifically, the dynamic signature encryption key control section 16, the dynamic signature verifying section 14, the encryption operation section 18, and so on are achieved by a computer CPU constituting the digital signature preparing server 10, and a program executed by the CPU. Further, the control database 12 and the recording database 20 are achieved by a CPU, a database program to be executed by the CPU, and a memory means such as a hard disk.

### Database Content

The content of a table used in the control database 12 will next be described.

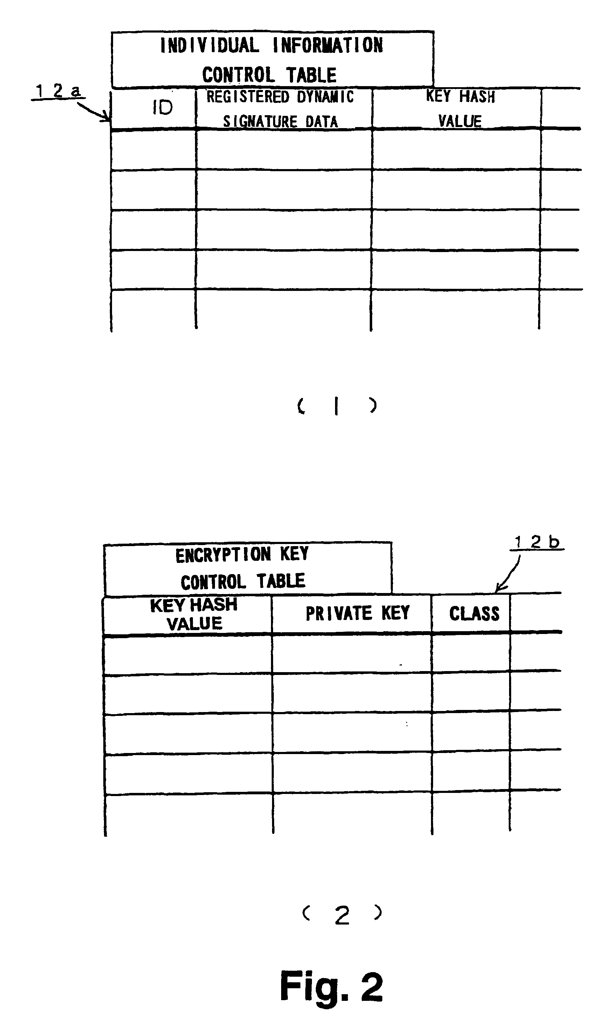

Fig. 2 is a diagram for explaining the content of two types of tables used in the control database 12. Fig. 2(1) shows an individual information control table 12a; Fig. 2(2) shows an encryption key control table 12b.

As shown in Fig. 2(1), the individual information control table 12a is a table storing a user's "ID", "registered dynamic signature data", and a "key hash value". A "key hash value" is a private key converted into a hash value, using a predetermined hash function, and utilized in an encryption key control table 12b (described later). A hash value is used here because searching for the values of a private key, which can be as long as 500 to 1000 bits, requires a relatively long time to complete.

As outlined above, a user's "ID" is used for user identification in this embodiment (see Fig. 2(1)), and one user is allowed to have a plurality of IDs. Therefore, one user who has two or more functions can use a different signature for every function.

This embodiment is characterized by the fact that the system accepts use of a plurality of IDs by one user.

Because an individual information control table 12a is employed, a single user can control a plurality of signatures as required, and signature processing is thereby made convenient.

Further, with the configuration of this embodiment, it is possible for a plurality of users to share a single private key. That is, assignment of one key hash value to people with different IDs allows two or more people to commonly use a single private key.

For example, the above mentioned company key may be used by two or more of a company's directors. In such a case, according to this embodiment, these directors can conveniently share one company key for a digital signature system.

Fig. 2(2) shows an encryption key control table 12b. As shown, the encryption key control table 12b stores a "key hash value", a "private key" for use for signature, and a "class". A "key hash value" here is identical to that which was explained referring to Fig. 2(1). A "class" is data indicative of the relative importance of a private key and, though not required for the present invention, can be used for controlling the key.

Using the individual information control table 12a, a "key hash value" is obtained according to each user's "ID". The "key hash value" is used as a key when searching the content of the encryption key control table 12b. By locating a specific "key hash value" in the encryption key control table 12b, a corresponding "private key" can be obtained from the encryption key control table 12b.

As described above, a "key hash value" serves as a key to relate the individual information control table 12a and the encryption key control table 12b. It should be noted that the "key hash value" in this embodiment may be preferably substituted by a simple sequential number as long as correspondence to a private key is maintained.

Also, two types of tables, one normalized with respect to IDs and the other normalized with respect to a private key, are used in this embodiment to achieve separate control of individual users and keys. This enables more efficient control because, when users of the digital signature preparing server 10 increase, the individual information control table 12a may be accordingly adjusted, while, when the number of private keys are reduced, the encryption key control table 12b may be adjusted alone.

However, as a control database 12 can fully function when corresponding registered dynamic signature data and private keys can be obtained based on an ID, the individual information control table 12a and the encryption key control table 12b may be integrated into one table so that processing relating to the control database 12 is applied based on the integrated single table.

Integration of the individual information control table 12a and the encryption key control table 12b results in a table containing items, namely, a user's "ID", "registered signature data", a "private key", and a "class", while omitting a "key hash value".

As described above, this embodiment is characterized by the provision of a digital signature preparing server 10, which centrally controls a private key for use for a digital signature. This eliminates the need for an individual user to control their own private key. Also, as sharing of one private key by a plurality of persons is allowed with the configuration of this embodiment, a company key can be smoothly used. Still further, as one person can control a plurality of private keys, a different digital signature can be used for each function.

### Embodiment 2.

In the above described Embodiment 1, private keys are centrally controlled using a control database 12 in the digital signature preparing server 10. However, such central control of private keys introduces a risk that all keys could lost or stolen. To hedge against such risk, a private key may be stored in an external memory means.

If this is done, when the digital signature preparing server 10 is not in operation, the external memory means is taken out of the digital signature preparing server 10, and stored in a secure place. With this arrangement, security of private keys is enhanced.

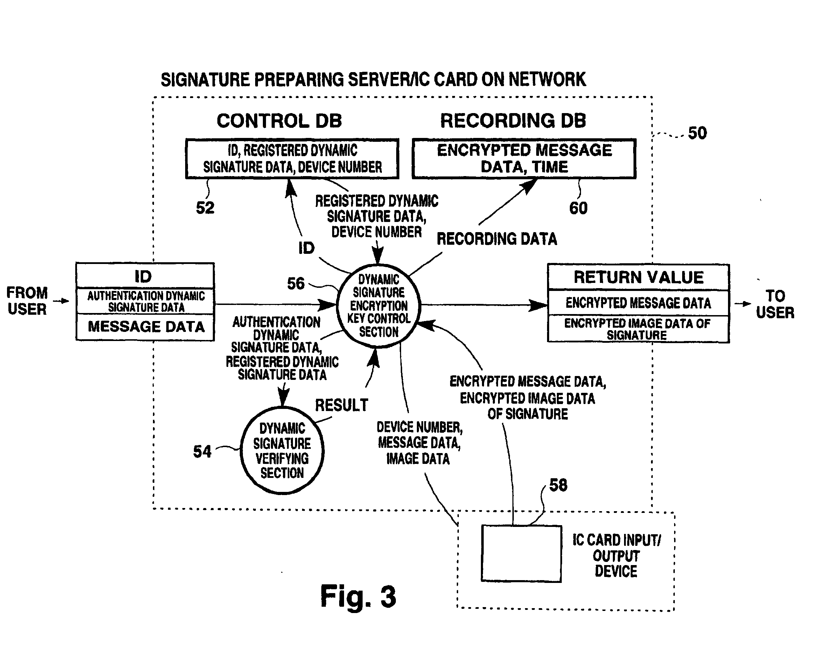

Fig. 3 is a block diagram showing a structure of a digital signature preparing server 50 adapted to storage of a private key in an external memory means.

A digital signature preparing server 50 in this embodiment differs from the digital signature preparing server 10 in the first embodiment in that a private key is stored in an external IC card. Because the private key is stored in an IC card, the digital signature preparing server 50 is provided with an IC card input/output device 58, as shown in Fig. 3.

Accordingly, a control database 52 differs from the counterpart in the first embodiment 1 in that it stores a "device number" of an IC card which stores a private key, instead of the private key itself.

Therefore, a dynamic signature encryption key control section 56 in the second embodiment supplies a "device number" instead of a "private key" to the IC card input/output device 58. Based on the supplied "device number", the IC card input/output device 58 supplies "message data" to an IC card designated by the "device number".

An IC card 62 with "message data" supplied encrypts the message data using a private key stored therein, and outputs the encrypted message data to the outside.

As outlined above, in this embodiment, an IC card 62 includes not only a memory means, but also an operation means so that encryption operations are performed inside the IC card 62. As a result, the private key itself is not removed from the IC card, thereby increasing security of the private key. As described above, the private key is itself stored inside an IC card, and the IC card outputs message data after encryption (signature processing).

The digital signature preparing server 50 in the second embodiment differs from the digital signature preparing server 10 in the first embodiment in that the encryption operation section 18 is incorporated into the IC card 62, and that a private key is saved in an IC card 62. Because of these differences, the control database 52 in the second embodiment stores a "device number" of the IC card 62 storing the "private key," rather than a "private key" itself.

Other than as explained above, the digital signature preparing server 50 operates in substantially the same manner as the digital signature preparing server 10 of Embodiment 1.

### Operation

Similar to the first embodiment, in this second embodiment a user's "ID", "authentication dynamic signature data", and "message data" are input to the digital signature preparing server 50 (see Fig. 3). The "ID" and "authentication dynamic signature data" are then sent from the dynamic signature encryption key control section 56 to the control database 52, which in turn outputs registered dynamic signature data, as well as a "device number" indicative of the IC card 62 with a private key stored therein.

The dynamic signature encryption key control section 56 then sends the registered dynamic signature data, received from the control database 52, and the authentication dynamic signature data input by the user to the dynamic signature verifying section 54. The dynamic signature verifying section 54 applies the same operation as that of the dynamic signature verifying section 14, and then returns a verification result back to the dynamic signature encryption key control section 56.

The dynamic signature encryption key control section 56 then sends "message data" and "image data" to the IC card input/output device 58. Here, as described above, the dynamic signature encryption key control section 56 sends a "device number" for designation of an IC card 62 storing a private key, rather than the "private key" itself. Therefore, the IC card input/output device 58 supplies "message data" to be signed, and "image data", or image data indicative of a user's handwritten signature, to an IC card 62 designated by the "device number".

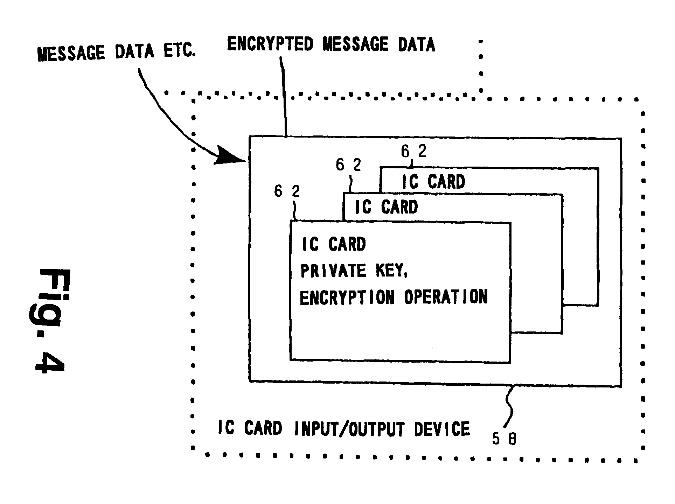

Fig. 4 is a diagram for explaining operation of an IC card 62. As shown, the IC card 62 is equipped with a memory function for storing a private key, and also an operation function for encryption operation. Using a private key stored therein, the IC card 62 encrypts the supplied "message data" and "image data", and then sends the encrypted "message data" and "image data", i.e., signed "message data" and "image data", to the dynamic signature encryption key control section 56.

Subsequently, the signed "message data" or the like is processed in the dynamic signature encryption key control section 56 in the same manner as that in the digital signature preparing server 10 in the first embodiment. That is, "encrypted message data" and so on is stored in a recording database 60, and a "return value", "encrypted message data", and "encrypted signature image data" are output to the outside.

### Database Content

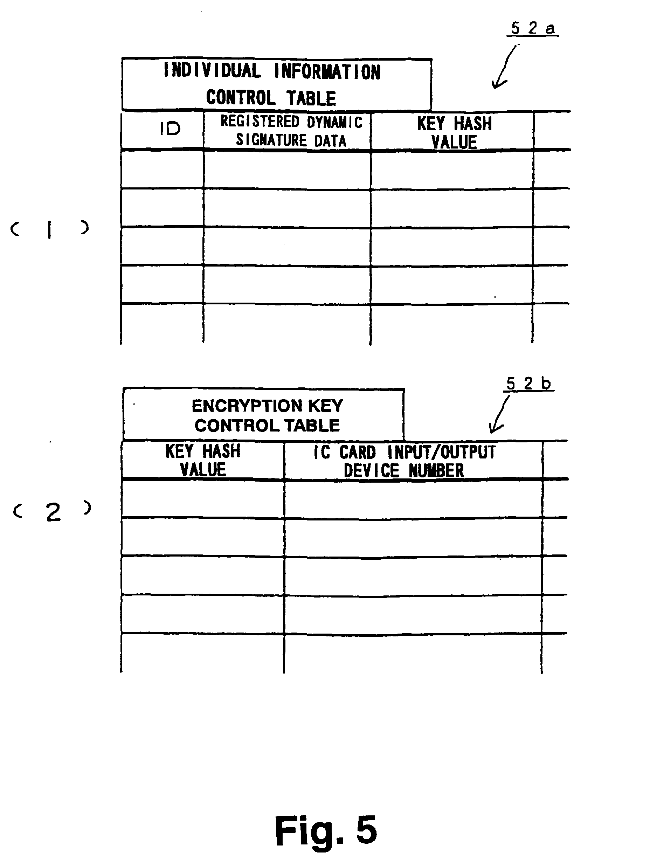

Fig. 5 is a diagram for explaining two tables contained in the control database 52 in the second embodiment. Fig. 5(1) shows an individual information control table 52a, the content thereof being the same as that of the individual information control table 12a in the first embodiment. Fig. 5(2) shows an encryption key control table 52b, the content thereof being partly different from that of the encryption key control table 12b. As shown in Fig. 5(2), in this embodiment, the encryption key control table 52b does not contain a "private key" itself, but contains an "IC card input/output device number" instead. By using a table of this structure, a device number is supplied to the dynamic signature encryption key control section 56, as described with reference to Fig. 3. Note that the individual information control database 52a and the encryption key control table 52b are made to relate to each other by means of a key hash value.

As described above, because a private key is stored in an external IC card in this embodiment, a private key can be placed under more secure control. For example, an owner of a private key may remove an IC card containing his private key from an IC card input/output device when the digital signature preparing server 50 is not in operation, and keep it on his person. This arrangement more reliably protects a private keys.

Further, as an IC card 62 is provided not only with a memory function for storing a private key but also with an encryption operation function, data on a private key is not output from the IC card 62. Therefore, a private key security can be more strongly maintained.

### Modification

Other than the IC card 62 used as an external memory means in the above example, various other external memory means may be used as an external means for storing a private key. For example, a floppy disk may also be preferably used.

However, when a floppy disk is used as a private key memory means, the disk does not have an operation function. Therefore, for example, rather than as described above, in this case, the digital signature preparing server 50 is provided with an encryption operation section 18, similar to the first embodiment, though the encryption operation section 18 here receives a "device number" instead of a "private key", differing from the first embodiment. The encryption operation section 18 reads a private key from a floppy disk or the like designated by the "device number", and then applies an encryption operation using the read private key.

Alternatively, an encryption key control table, used in the control database 12 in the first embodiment, is stored in an external memory means. That is, an control database 12 is constructed using an external memory means. With this structure, a private key can be more reliably protected when the external memory means is removed from the digital signature preparing server 50 being not in operation.

### Embodiment 3.

In Embodiment 3, user identification is applied on a computer used by a user, based not only on the user's ID or the like, but also on his authentication dynamic signature data, and digital signature processing is applied using a private key of the user thus identified.

Specifically, the third embodiment is achieved using a program which is operable on a computer.

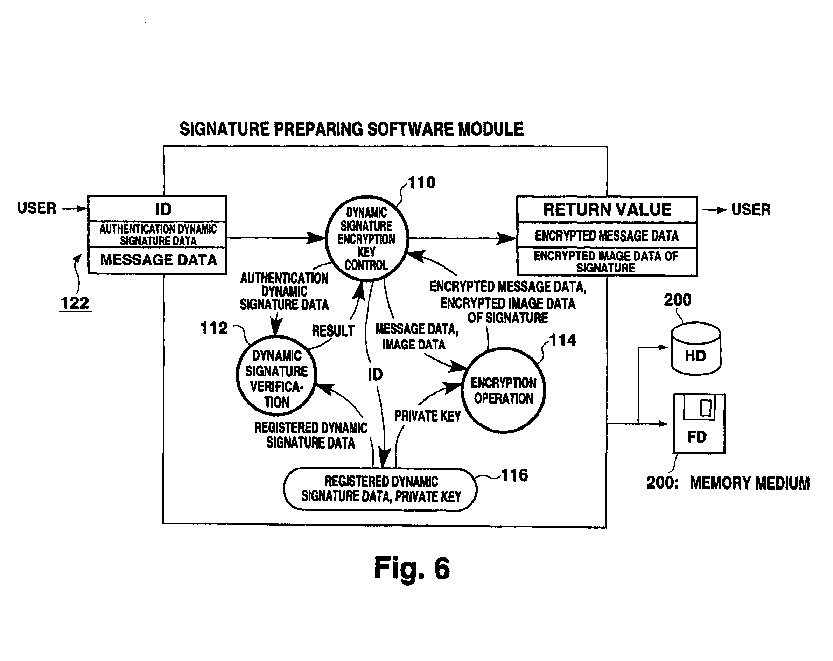

Fig. 6 is a diagram showing a structure for program modules according to the third embodiment. As shown, a main program contains a dynamic signature encryption key control module 110, a dynamic signature verification module 112, an encryption operation module 114, and an array control module 116.

In the third embodiment, a program containing these modules is employed to create a signature on input message data in response to a user's request.

### Input Signal

Characteristic points of this embodiment will first be described, with emphasis on a signal supplied to the program.

As shown in Fig, 6, an input 122 contains a user's "ID", "authentication dynamic signature data", and "message data" which the user wishes to sign. With this program, the "message data" is encrypted using the user's private key to thereby sign the "message data". The "encrypted (signed) message data" is then output.

Here, authentication dynamic signature data is biometric data identifying a specific individual, such as data on a user's "handwritten signature", fingerprint, retina pattern, or the like. In this embodiment, a user wishing to utilize authentication writes a "handwritten signature" on a tablet or similar input device provided as a peripheral device to the computer, to thereby input authentication dynamic signature data.

"Authentication dynamic signature data" contained in an input 122 for this program is dynamic signature data input by a user wishing to apply a digital signature. As described above, data on a user's "handwritten signature", input via a tablet terminal, may be used as "authentication dynamic signature data".

In the array control module 116 , the "authentication dynamic signature data" is compared with "registered dynamic signature data" pre-included in an array for verification. This comparison and verification are carried out in the dynamic signature verification module 112. As described above, as biometric data is used for user identification in this embodiment, unauthorized application of a digital signature by an unauthorized person can be effectively prevented. Operation flow for identification process will be described later.

Also, as shown in Fig. 6, this program contains an array control module 116 for controlling individual user "IDs" and "private keys". Specifically, an "ID" and a "private key" are stored in an array. "Registered dynamic signature data" described above is controlled in the array control module 116 as being stored in an array.

The third embodiment is characterized by the fact that a private key or the like is not stored in a specific hardware device such as an IC card, but is instead incorporated into software stored on an appropriate medium. The incorporation may be achieved using various conventional methods. For example, with this embodiment, a user's "ID", "private key", or the like may be stored in a data array.

As described above, because in the present embodiment, a private key is incorporated into software, an unauthorized person, even one who has stolen or otherwise somehow copied or obtained the software, cannot abuse the program by, for example, using a regular private key based on an incorrect ID. The program remains secure because the "ID" and the content of the "private key" are incorporated into the program and cannot readily be rewritten by a person other than the creator of the program.

The third embodiment is characterized by the fact that a private key is not controlled by an individual user, or its owner, but is controlled by means of a software program. With this arrangement, private keys can be centrally controlled, which can free the users from the need to apply a complicated private key controlling process.

It should be noted that dynamic signature data, exemplified by "handwritten signature data" in the above description, may be any other data capable of biometric identification of an authorized user, such as a fingerprint, retina pattern, or the like.

### Operation

Operation in a digital signature preparation method according to the present invention will next be described, with emphasis on the flow of program processing.

In a program according to the third embodiment, upon receipt of an input 122 consisting of a user's "ID", "authentication dynamic signature data", and "message data", the dynamic signature encryption key control module 110 reads from the array control module 116 "registered dynamic signature data" which is registered with respect to the user identified by that ID. As shown in Fig. 6, the dynamic signature encryption key control module 110 supplies "ID" to the array control module 116, which in turn searches the data stored in an array using the "ID" as a key, and outputs "registered dynamic signature data" and a "private key".

The "registered dynamic signature data" output from the array control module 116 is supplied to the dynamic signature verification module 112, as shown in Fig. 6. Meanwhile, the dynamic signature encryption key control module 110 supplies "authentication dynamic signature data" input by the user to the dynamic signature verification module 112.

The dynamic signature verification module 112 then compares the supplied "authentication dynamic signature data" with the "registered dynamic signature data" for verification, and outputs the result to the dynamic signature encryption key control module 110.

When the characteristics of the "registered dynamic signature data" coincide with those of the "authentication dynamic signature data" input by the user, it is determined that both sets of biometric signature data belong to the same person, and it is decided that the request for digital signature is appropriate (i.e., the request was made by an authorized user). In this case, the dynamic signature verification module 112 sends a comparison result "normal" to the dynamic signature encryption key control module 110. When the comparison result "normal" is sent to the dynamic signature encryption key control module 110, digital signature processing (described later) is executed in the encryption operation module 114.

However, when the characteristics of the "registered dynamic signature data" registered in advance in the array control module 116 do not coincide with those of the input "authentication dynamic signature data", and the dynamic signature verification module 112 (see Fig. 6) determines that these are not biometric signature data belonging to the same person, it is concluded that the request for digital signature is not legitimate. Therefore, the program rejects the user's request and sends a rejection message via the dynamic signature encryption key control module 110 to the user.

Here, when the dynamic signature verification module 112 sends a "normal" result massage to the dynamic signature encryption key control module 110, the dynamic signature encryption key control module 110 causes the encryption operation module 114 to apply digital signature processing. That is, the encryption operation module 114 encrypts the message data using a private key.

It should be noted that the private key has already been output from the array control module 116, as shown in Fig. 6, so that the encryption operation module 114 can conduct encryption operation, or digital signature processing, using the private key.

As shown in Fig. 6, the encryption operation module 114 receives "message data" to be encrypted, from the dynamic signature encryption key control module 110 and, in this embodiment, additionally receives "image data" to be also encrypted. The encryption operation module 114 encrypts (signs) both "message data" and "image data".

"Image data" here is image data representing, in an image form, "authentication dynamic signature data" input by the user. "Authentication dynamic signature data" is numerical data expressing, for example, the dynamic of a pen with which the user writes a "handwritten signature", as speed, direction, pressing force, or the like. The data expressing a "handwritten signature" in the form of an image, is image data which is a reproduction of the dynamic of the pen on a sheet of paper so that the signature data (the numerical data indicative of a pressing force and so on) is expressed in a visible form to aid visual recognition by human users.

Conversion of "authentication dynamic signature data" into image data is carried out in the dynamic signature encryption key control module 110, and the converted image data is supplied to the encryption operation module 114, as shown in Fig. 1.

As described above, image data of signature data is encrypted in this embodiment because of a demand to write a signature in a visible form in a message. However, encryption of image data is not a requirement of the present invention.

After encrypting "message data" and "image data", the encryption operation module 114 outputs the "encrypted message data" and "encrypted signature image data".

The dynamic signature encryption key control module 110 then sends back to the user the "encrypted message data" and "encrypted signature image data". With this arrangement, the user can easily apply signature processing, yet need not control his own private key. In particular, as not just an ID, but also biometric dynamic signature data is used for identification in this embodiment, affixing of a signature with unauthorized use of a private key can be effectively prevented.

Further, the dynamic signature encryption key control module 110 returns also "a return value" to the user, a "return value" being a kind of code referred to as "a return code" indicative of an encryption operation result.

By examining the "return value", the user can obtain detailed information as to whether or not the encryption operation has been duly completed or whether or not characteristics matched between registered authentication data and authentication dynamic signature data for a person identified by the ID.

It should be noted that the respective components of the digital signature preparing method according to the present invention are achieved by means of a software program.

Specifically, the dynamic signature encryption key control module 110 corresponds to an input step and so on. The dynamic signature encryption key control module 110 achieves, in cooperation with the dynamic signature verification module 112, a detection step of the present invention; the dynamic signature encryption key control module 110 achieves, in cooperation with the array control module 116, a registered dynamic signature data obtaining step; and the dynamic signature encryption key control module 110 achieves, in cooperation with the encryption operation module 114, a digital signing step.

The dynamic signature encryption key control module 110 achieves a conversion step for conversion into image data.

Further, the software comprising the above modules is stored in a computer readable memory medium 200 when the computer is not operated. The memory medium 200 is generally a hard disk, and alternatively may be any appropriate computer readable memory medium, such as a magnetic disk or an optical disk.

### Array Content

The content of an array used in the array control module 116 will next be described.

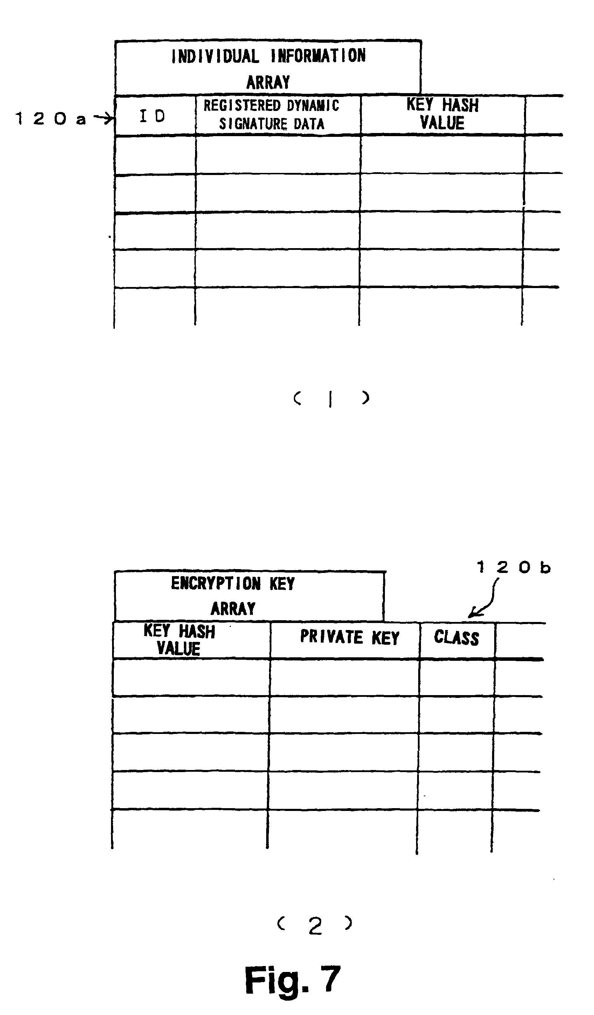

Fig. 7 is a diagram for explaining the content of two types of arrays which are used in the array control module 116. Fig. 7(1) shows an individual information array 120a, while Fig. 7(2) shows an encryption key array 120b.

As shown in Fig. 7(1), the individual information array 120a is an array storing a user's "ID", "registered dynamic signature data", and "a key hash value". A "key hash value" is a private key converted into a hash value using a predetermined hash function, and is utilized in the encryption key array 120b (described later). A hash value is used here because searching using the value of a private key, which may be as long as 500 to 1000 bits, requires a relatively long time to complete.

As described above, a user's "ID" is used for user identification in this embodiment (see Fig. 7(1)), and one user is allowed to have a plurality of IDs. Therefore, one user who has two or more functions can use a different signature for each function.

This embodiment is characterized by the fact that the system accepts use of a plurality of IDs by one user.

Because an individual information array 120a is employed, a single user can use a plurality of signatures as required, and signature processing is thereby made convenient.

Further, with the configuration of this embodiment, it is possible for a plurality of users to share a single private key. That is, assignment of one key hash value to people with different IDs allows two or more people to commonly use a single private key.

For example, a company key may be used by two or more directors. In such a case, according to this embodiment, these directors can share one company key, thereby creating a convenient digital signature system.

It is also possible, when one computer is shared by a plurality of users, that each user has his own private key, and that an additional common key is shared by the plurality of users.

Fig. 7(2) shows an encryption key array 120b. As can be seen from the figure, the encryption key array 120b stores a "key hash value", a "private key" for signature uses, and a "class". A "key hash value" here is the same as that which was explained above while referring to Fig. 7(1). A "class" is data indicative of importance of a private key, and is used for control of the key; it is not, however, a requirement the present invention.

Using the individual information array 120a, a "key hash value" is obtained according to an "ID" of each user. The "key hash value" is used as a key in searching the content of the encryption key array 120b. That is, by finding a concerned "key hash value" in the encryption key array 120b, a corresponding "private key" can be known from the encryption key array 120b.

As described above, a "key hash value" serves as a key to relate the individual information array 120a and the encryption key array 120b. Note that the "key hash value" in this embodiment may preferably be substituted by a simple consequence number as long as it corresponds to a private key.

Also, two types of arrays, one normalized with respect to IDs and the other normalized with respect to a private key, are used in this embodiment for separate management of individual users and keys. This enables efficient management because, when the number of users of the digital signature preparing method according to this embodiment increases, the individual information array 120a may be accordingly adjusted, while, when the types of private keys are reduced, just the encryption key array 120b may be adjusted.

However, as an array control database 116 is fully functional when corresponding registered dynamic signature data and private key can be obtained based on an ID, the individual information array 120a and encryption key array 120b may be integrated into a single array so that processing relating to the array control module 116 can be applied based on the integrated single array.

Integration of the individual information array 120a and encryption key array 120b results in an array containing items including a user's "ID", "registered signature data", a "private key", and a "class", while omitting a "key hash value".

As described above, this embodiment is characterized by the provision of a program for centrally controlling a private key for use for digital signature. In particular, as a private key is saved in the form of an array in the program, it is extremely difficult for a person other than the program's creator to delete or forge a private key in the program, or to newly add a key.

Further, as biometric signature data is used for identification in this embodiment, more accurate identification can be achieved, which can effectively prevent an unauthorized person from "posing" or the like.

Therefore, even if a third party were able to obtain the program according to this embodiment, he would not be able to use the private key. Because program forging to abuse a private key is extremely difficult, digital signature can be safely and reliably utilized. Also, as sharing of one private key by a plurality of persons is accepted in this embodiment, a company key can be smoothly used. Further, as holding of a plurality of private keys by one person is also accepted, a different digital signature can be applied for every function.

As described above, the third embodiment is characterized by the following:
(1) Because of the use of biometric signature data, each user can access a private key if he remembers only his ID, which is generally shorter than a typical password;
(2) As each user is required only to manually write his signature on a tablet for identification, smooth transition from a conventional signature using a sheet of paper can be realized; and
(3) As image data of "handwritten signature data" which is used for authentication upon necessity can be utilized, consistency and similarity with a conventional manual signature can be maintained.

### Advantages of the Present Invention

As described above, according to the present invention, there is provided a digital authentication system comprising a memory means for storing a private key whereby the need for each user to control his private key is eliminated. With this arrangement, control of a private key is facilitated.

Also, according to the present invention, as a plurality of users can share one private key, a company key can be readily controlled, and a substitutional signature can a be easily added.

Further, according to the present invention, as one user can own a plurality of private keys, he can advantageously use a different digital signature for every function or job title.

Still further, according to the present invention, as biometric signature data is used for user identification, unauthorized use can be reliably prevented to provide a very safety digital signature system.

Yet further, according to the present invention, as a handwritten signature is one type of biometric signature data employed, users can be reliably identified.

Yet further, according to the present invention, as a retina pattern is one type of biometric signature data employed, users can be reliably identified.

Yet further, according to the present invention, as a fingerprint is one type of biometric signature data employed, users can be reliably identified.

Yet further, according to the present invention, as signature is affixed to image data on a handwritten signature, a manually written signature can be perceived as an image.

Also, as a private key is held by means of a detachable external memory means, safety for a private key can be enhanced when the external memory means is removed from a server and stored elsewhere.

Further, when a signing means is integrally formed to the external memory means, a private key is not taken to the outside of the external memory means, which can further enhance the safety for a private key.

Still further, according to the present invention, an IC card is used for an external memory means. When the IC card is formed to incorporate a memory means and an operation means, a digital signature preparing system can be readily realized.

Yet further, according to the present invention, as biometric signature data is used for user identification, user identification can be more reliably made.

Yet further, according to the present invention, as a plurality of users can share one private key, a company key can be readily controlled, and a substitutional signature can be easily added.

Yet further, according to the present invention, as one user can own a plurality of private keys, that user can advantageously use a different digital signature for every function or job title.

Yet further, according to the present invention, as a handwritten signature is one type of biometric signature data employed, users can be reliably identified.

Yet further, according to the present invention, as a retina pattern is one type of biometric signature data employed, users can be reliably identified.

Yet further, according to the present invention, as a fingerprint is one type of biometric signature data employed, users can be reliably identified.

Yet further, according to the present invention, as signature is affixed to image data on a handwritten signature, a manually written signature can be perceived as an image.

Yet further, as the present invention relates to a computer readable memory medium, information on a private key, and so on is contained in a program.

Therefore, according to the present invention, the above advantages, as well as an additional advantage that abuse of a private key can be prevented even when the key is copied by a third person, can be readily achieved.

## Claims

1. A digital signature preparing server for receiving message data to be digitally signed and an identifier of a user requesting a digital signature, for signing the message data using a private key of the user, and for outputting the message data signed, the digital signature preparing server, comprising:
private key memory means for storing the private key of the user, the key being registered therein in advance, and for outputting the private key registered of the user based on the identifier of the user; and
signing means for signing the message data using the private key.

2. A digital signature preparing server according to claim 1, wherein the private key memory means is capable of handling a case where identical private keys are stored with respect to identifiers of different users.

3. A digital signature preparing server according to claim 1, wherein the private key memory means is capable of handling a case where one user has a plurality of identifiers.

4. A digital signature preparing server according to any one of claims 1, 2, and 3, further comprising
biometric signature data memory means for storing biometric signature data on the user, the data being registered therein in advance, and for outputting the registered biometric signature data on the user based on an identifier of the user; and
detection means for comparing input biometric signature data input by the user and the registered biometric signature data on the user, output by the biometric signature data memory means, to detect whether or not characteristic amounts coincide between them,
wherein
the signing means signs the message data using the private key obtained, only when the detection means determines coincidence of the characteristic amounts.

5. A digital signature preparing server according to claim 4, wherein the biometric signature data is data on a signature manually written by the user.

6. A digital signature preparing server according to claim 4, wherein the biometric signature data is data on the user's retina pattern.

7. A digital signature preparing server according to claim 4, wherein the biometric signature data is data on the user's fingerprint.

8. A digital signature preparing server according to claim 5, further comprising
conversion means for converting into image data, the input biometric signature data, specifically, the data on a signature manually written by the user;
image data signing means for signing the image data, using the private key; and
image data output means for outputting the image data signed.

9. A digital signature preparing server according to any one of claims 1, 2, and 3, wherein the private key memory means comprises an external memory means detachable from the digital signature preparing server.

10. A digital signature preparing server according to any one of claims 1, 2, and 3, wherein the private key memory means comprises an external memory means detachable from the digital signature preparing server, and the signing means is formed integrally to the external memory means.

11. A digital signature preparing server according to claim 10, wherein the external memory means comprises an IC card.

12. A digital signature preparing method, comprising:
an input step of inputting message data to be digitally signed, an identifier of a user requesting a digital signature, and biometric signature data on the user;
a registered biometric signature data obtaining step of obtaining registered biometric signature data on the user based on the identifier of the user;
a detection step of comparing the input biometric signature data and the registered biometric signature data on the user, to detect whether or not characteristic amounts coincide between them; and
a digital signing step of digitally signing the message data using the private key of the user only when the characteristic amounts are detected coincident with each other at the detection step.

13. A digital signature preparing method according to claim 12, wherein identical private keys are able to be obtained with respect to identifiers of different users at the registered biometric signature data obtaining step.

14. A digital signature preparing method according to claim 12, wherein the registered biometric signature data obtaining step is capable of handling a case where one user has a plurality of identifiers.

15. A digital signature preparing method according to any one of claims 12, 13, and 14, wherein the biometric signature data is data on a signature manually written by the user.

16. A digital signature preparing method according to any one of claims 12, 13, and 14, wherein the biometric signature data is data on the user's retina pattern.

17. A digital signature preparing method according to any one of claims 12, 13, and 14, wherein the biometric signature data is data on the user's fingerprint.

18. A digital signature preparing method according to claim 16, further comprising
a conversion step of converting into image data, the input biometric signature data, specifically, the data on a signature manually written by the user, and
an image data signing step of signing the image data, using the private key.

19. A computer-readable recording medium containing a program which, when executed, causes the computer to follow
an input step of inputting message data to be digitally signed, an identifier of a user requesting a digital signature, and biometric signature data on the user;
a registered biometric signature data obtaining step of obtaining registered biometric signature data on the user based on the identifier of the user;
a detection step of comparing the input biometric signature data and the registered biometric signature data on the user, to detect whether or not characteristic amounts coincide between them; and
a digital signing step of digitally signing the message data using the private key of the user only when the characteristic amounts are detected coincident with each other at the detection step.

20. A computer-readable recording medium according to claim 19, wherein identical private keys are able to be obtained with respect to identifiers of different users at the registered biometric signature data obtaining step.

21. A computer-readable recording medium according to claim 19, wherein the registered biometric signature data obtaining step is capable of handling a case where one user has a plurality of identifiers.

22. A computer-readable recording medium according to any one of claims 19, 20, and 21, wherein the biometric signature data is data on a signature manually written by the user.

23. A computer-readable recording medium according to any one of claims 19, 20, and 21, wherein the biometric signature data is data on the user's retina pattern.

24. A computer-readable recording medium according to any one of claims 19, 20, and 21, wherein the biometric signature data is data on the user's fingerprint.

25. A computer-readable recording medium according to claim 22, which causes the additional steps of
a conversion step of converting into image data, the input biometric signature data, specifically, the data on a signature manually written by the user, and
an image data signing step of signing the image data, using the private key.
